Europäisches Patentamt

European Patent Office

Office européen des brevets

(11) Publication number: **0 051 919**
**A1**

(12) # EUROPEAN PATENT APPLICATION

(21) Application number: 81304585.3

(22) Date of filing: 02.10.81

(51) Int. Cl.³: **C 09 D 5/02**

(30) Priority: 14.10.80 GB 8033067

(43) Date of publication of application: 19.05.82
Bulletin 82/20

(84) Designated Contracting States: **AT BE DE FR IT NL SE**

(71) Applicant: **Berger, Jenson and Nicholson Limited, Berger House Berkeley Square, London, W1X 6NB (GB)**
Applicant: **Black & Decker, Cannon Lane, Maidenhead Berkshire, SL6 3PD (GB)**

(72) Inventor: **Burnett, Christopher Robert, Berger Paints P.O. Box 20 Petherton Road, Bristol BS99 7JA (GB)**
Inventor: **Ford, Martin Peter, Berger Paints P.O. Box 20 Petherton Road, Bristol BS99 7JA (GB)**
Inventor: **Lageu, Anthony Charles, Berger Paints P.O. Box 20 Petherron Road, Bristol BS99 7JA (GB)**
Inventor: **Powell, Mark Terrence, Berger Paints P.O. Box 20 Petherton Road, Bristol BS99 7JA (GB)**
Inventor: **Shipp, Derek John, Berger Paints P.O. Box 20 Petherton Road, Bristol BS99 7JA (GB)**

(74) Representative: **Pennant, Pyers et al, Stevens, Hewlett & Perkins 5 Quality Court Chancery Lane, London, WC2A 1HZ (GB)**

(54) Emulsion paint and method of painting.

(57) An emulsion paint for use with a pressurised applicator, comprising film-forming resin together with pigment and/or extender and other conventional paint ingredients in an aqueous medium, has an efflux time viscosity, measured as the time required to pump 100 ml through a tube of internal diameter 5 mm and length about 1.4 m under conditions defined herein:

| Temp. (°C) | Pressure (kPa) | Pretreatment | Permitted efflux time (seconds) |
|---|---|---|---|
| 20 | 69 | Storage overnight | About 40 to about 100 |
| 5* | 69 | » | Not more than about 120 |
| 30 | 69 | » | Not less than about 35 |
| 20 | 62 | » | Not more than about 120 |
| 20 | 103 | » | Not less than about 20 |
| 20 | 69 | Storage for 3 months | About 40 to about 100 |
| 20 | 69 | 7 freeze-thaw cycles | About 40 to about 100 |

* Gloss paints tested at 10°C

EP 0 051 919 A1

0051919

EMULSION PAINT AND METHOD OF PAINTING.

This invention relates to an emulsion paint formulated for use with a pressurised applicator. Our Patent Application PCT/GB 79/00131 describes and claims an applicator in which paint is fed from a container by means of pressurised gas along a flexible tube to an applicator, for example, a brush, pad or roller. Ordinary commercially available paints are not very suitable for use in such applicators. For example, solvent-based paints tend to attack valves and glands of the pressurising system. Water-based paints tend to be too thick to flow through the flexible tube to the applicator; or, if diluted with water to avoid this difficulty, to be too thin for effective painting by the applicator, and to have poor covering power.

The present invention provides an emulsion paint for use with a pressurised applicator, comprising film-forming resin together with pigment and/or extender in an aqueous medium, and having an efflux time viscosity, measured as the time required to pump 100 ml through a tube of internal diameter 5 mm and length about 1.4 m under conditions defined herein:-

| Temperature (°C) | Pressure (kPa) | Pre-treatment | Permitted efflux time. (seconds) |
|---|---|---|---|
| 20 | 69 | Storage overnight | about 40 to about 100 |
| 5* | 69 | " | not more than about 120 |
| 30 | 69 | " – | not less than about 35 |
| 20 | 62 | " | not more than about 120 |
| 20 | 103 | " | not less than about 20 |
| 20 | 69 | Storage for 3 months | about 40 to about 100 |
| 20 | 69 | 7 Freeze-thaw cycles | about 40 to about 100 |

* Gloss paints tested at 10°C

The invention also provides a method of applying paint by means of a pressurised applicator, characterized in that the paint is as defined above.

In conventional painting, the amount of paint picked up on the brush or other applicator is determined by the viscosity measured at low or zero rate of shear, and this type of viscosity is often referred to as low-shear viscosity, structure, or structural viscosity. A special embodiment of this type of structure can be seen in paints intended for the "do-it-yourself" market which are known as non-drip paints, where a very high structure or gel strength is required to get high brush loading and freedom from drips. Other paints, particularly gloss paints based on solutions of alkyd resin in organic solvent, are formulated to have low structural viscosity; such paints are said to show Newtonian viscosity behaviour because their viscosities at high and low rates of shear are approximately the same. One of the disadvantages of paints exhibiting Newtonian behaviour is that on storage the paint will often separate into distinct layers, and in extreme cases a hard settlement will form which is difficult to re-incorporate before usage. This separation is caused by the high specific gravity of the pigment used in paints to provide opacity and colour, which under the influence of gravity will sink to the bottom of a container.

For paint that is to be applied by a pressurised gas applicator, the problems of brush loading and dripping are minimised. Also, paints with high structural viscosity would not flow through a flexible tube from the container to the applicator. The invention is therefore concerned with paints which exhibit substantially Newtonian viscosity

0051919

but without the disadvantages of known paints of Newtonian characteristics. We have tried several standard tests of low-shear viscosity, but find that none is really successful at predicting which paints will, or will not, work in our pressurised applicator. So we have devised our own test for low-shear viscosity, called efflux time viscosity.

As indicated above, it is essential that paints according to this invention have efflux time viscosities (etv), measured under a variety of temperature and pressure conditions and after different pretreatments, within certain limits. The method of measuring etv is described below just before the Examples with reference to the accompanying drawing which is a diagram of the apparatus used.

At $20^{o}C$ and 69kPa pressure, the paint has an etv of from about 40 to about 100 secs. Matt and silk paints have an etv preferably from about 50 to about 70 secs, since an etv in this range provides an adequate flow of paint for even the fastest painter, while a typical painter working at average speed will have the on/off button of the applicator depressed for about half the time. In the case of primers and gloss paints, where smaller areas are painted, an etv of from about 70 to about 100 secs. is preferred. It is necessary that the paint should have an etv in this range after storage for three months, preferably six months, and desirably twelve months. It is also necessary that the paint should have an etv in this range after being subjected to seven freeze/thaw cycles.

The temperature of the paint in use may vary. It is necessary that the paint should be usable at $5^{o}C$ (matt, silk or primer) and $10^{o}C$ (gloss) or $30^{o}C$ (matt, silk,

gloss or primer), and therefore necessary that the etv's at these temperatures and 69 kPa pressure be neither more than about 120 seconds nor less than about 35 seconds respectively. (Gloss emulsion paints are formulated on hard polymers to avoid sticking of doors and window frames, and this imposes a restriction on their use at low temperatures due to their relatively high film-forming temperature. It is usual to specify a minimum application temperature of $10^{\circ}$C for gloss paints.)

The pressure of the applicator may vary about its intended value of 69 kPa. It is necessary that the paint should be usable at pressure from 62 kPa to 103 kPa, and therefore necessary that the etv's at these pressures and $20^{\circ}$C be neither more than about 120 seconds nor less than about 20 seconds respectively.

The high-shear viscosity determines the ease with which the paint can be spread over the surface to which it is applied. When the high-shear viscosity is too low, the paint is too easy to spread and a thin coating results giving poor covering power and minimal protection to the surface. When the high-shear viscosity is too high, the paint is difficult to spread and results in an uneven finish with the possibility of sags or runs, wrinkling, and differential colour formation occurring.

High-shear viscosity is generally in the range of about 0.2 to about 1.5 poise, preferably 0.4 to 1.0 poise, for matt and silk paints and primers, and in the range of about 0.4 to about 2.5 poise, preferably 0.7 to 1.5 poise, for gloss paints, measured at $25^{\circ}$C and a shear rate of 10000 $\sec^{-1}$. The effect of different ambient temperatures on high-shear viscosity of emulsion paint tends to be self-compensating. Thus at high temperatures which might cause premature drying and resultant difficulty in spreading the paint on the surface, the paint tends to become thinner and thus easier to spread. Similarly a reverse effect is noted at low temperatures.

A disadvantage of diluted conventional paint when used through the pressurised applicator is that blocking tends to occur due to the bittiness of the paint. Oversized particles tend to collect particularly in the on/off valve of the applicator handle, and also tend to clog the fine tubes used in the construction of the brush or clog the synthetic sponge used in the construction of the pad and the roller. When blockages occur paint flow is severely restricted. The paints of this invention may be therefore filtered through a 50 mesh British Standard sieve, preferably an 80 mesh British Standard sieve (i.e. they contain no particles greater than 0.3 mm, preferably no particles greater than 0.2 mm, in size.).

An important characteristic of paints, other than primers, is opacity. The paints of this invention preferably have an opacity, measured as contrast ratio, of at least 90% for matt paints and at least 80% for silk and gloss paints. The opacity of primer paint is not important. Many commercially available emulsion paints are too thick to be used with a pressurised applicator. They can often be made usable under some circumstances by dilution with water, but only at the expense of their opacity.

The formulation of silk and glossy emulsion paints gives rise to somewhat different problems to those involved in the formulation of matt emulsion paints.

Gloss values may be measured using gloss meters meeting specification ASTM D 523-78.   For the purposes of this invention, we define:-

Glossy emulsion - having a $60^o$ ASTM gloss above 60.

Silk emulsion - having a $60^o$ ASTM gloss between 20 and 60.

Matt emulsion - having a $60^o$ ASTM gloss less than  20.

Conventional materials can generally be used in formulating the paints of this invention, but optimum proportions are somewhat different to those for conventional paints.   Various paint ingredients are discussed in the following paragraphs.

1.   Pigments and Extenders.   All normal grades of opacifying and colouring pigments may be used at normal levels, but care is required in the selection of extenders. In particular, china clay and calcined china clay have been found to give rise to excessively high efflux time viscosities.   For this reason calcined clay should be kept below about 20% of the weight of the paint.   Uncalcined clay has the further undesirable property of causing the paint to structure on storage;   the proportion of uncalcined clay should be kept below 10% by weight of the paint.

Light or pastel coloured paints can be made by tinting white formulations, examples of which are set out below, using concentrated dispersions of coloured pigments.   For medium or dark coloured paints, e.g. those with a light reflectance value of less than 70%, it may be preferable to reduce the levels of costly titanium dioxide and other opacifying and colouring pigments.

Titanium dioxide has the property of increasing, to a minor extent, the low-shear viscosity of the paint. This property, which does not appear to be shared by other pigments, needs to be borne in mind when changing the formulation of a paint by addition or removal of titanium dioxide.

2.  Pigment Dispersing Agents.  In order to ensure that the paint remains free flowing, it is normally necessary to incorporate a pigment dispersing agent.  These agents are exemplified by chemicals showing specific surface activity and adsorption on to pigment surfaces such as polyphosphates, pyrophosphates, low molecular weight water-soluble polyacrylate and polymethacrylate salts and copolymers thereof, wetting agents produced by sulphonation, and phosphate ester derivatives.  The optimum proportion of such pigment dispersing agent in a paint according to the present invention is likely to lie in the range 0.3 to 1.5% by weight on the weight of the pigment, and to be somewhat higher than the optimum proportion in conventional emulsion paints.

3.  Polymer Emulsion.  The types of polymer emulsion contemplated according to this invention are those normally used by the paint industry, e.g. copolymers and homopolymers of vinyl acetate, vinyl propionate, vinyl versatate, acrylic acid esters, methacrylic acid esters, maleic acid esters, vinyl chloride, vinylidene chloride, ethylene, and other plasticising olefins.  Polymer emulsions are usually classified according to the method of stabilising the polymer dispersion in water, and the two main types may be distinguished.  In one case the emulsion particles are stabilised by using a surface active agent and these are referred to as surfactant stabilised emulsions.    In the other case, stability is obtained not only by the addition of surface active agents but also by the inclusion of so-called protective colloids, such as substituted water-soluble celluloses, e.g. low viscosity hydroxyethyl cellulose, and these are referred to as colloid stabilised emulsions.    Some commercially available emulsions contain particles which are stabilised by a mixture of surfactants and colloids.    Emulsions which are partly or wholly surfactant stabilised give rise to more stable paints and are accordingly preferred in the present invention.

The suitability of a polymer emulsion for use in paints according to the present invention may be determined by adjusting the solids content to 45% by weight of nonvolatile matter, and then measuring the viscosity by means of a Brookfield Viscometer at $25^{o}C$ with spindle number 2 at 12 r.p.m.    Polymer emulsions having a viscosity below 0.5 poise, measured under these conditions, can be used with confidence.    Polymer emulsions having a viscosity in the range of 0.5 to 4.0 poise can be used, though some care in formulating the paint may be necessary. Polymer  emulsions having viscosities in the range 4 - 15 poise are unlikely to be usable in matt or silk finish emulsion paints, though they may be suitable for use in gloss finish emulsion paints.

4.    Thickeners.    Emulsion paints generally require the addition of thickeners or colloids to provide non-drip properties and a degree of slip when applied by brush, to prevent rapid wicking of the water in the paint composition into a porous surface such as plaster, and to keep the pigments in suspension. Many types of such thickeners have been employed, including natural products such as gelatine, glue, guar gum, casein, and starch but synthetic products are normally preferred, e.g. hydroxyethyl cellulose, carboxymethyl cellulose, methyl cellulose, high molecular weight polyethylene oxide, water-soluble polyacrylate salts and polymethacrylate salts of high molecular weight, polyurethane copolymers, maleic acid/methyl vinyl ether copolymers, polyvinyl pyrollidone, polysaccharides grown by bacterial action such as xanthan gums, hectorite, macaloid, synthetic clays such as that sold under the Trade Mark Laponite, water soluble titanate salts and their zirconium and aluminium equivalents.

We have found that the grade of thickener or colloid selected and the level used is governed by the other ingredients of the paint recipe, but lower levels are often required than in conventional emulsion paints. Thickeners of any given type or brand are usually available in different molecular weights giving different degrees of thickening power at a fixed concentration in water. The grade, type and level of the other ingredients in the formulation will determine whether a high molecular weight or low molecular weight thickener is chosen, bearing in mind the various viscosity requirements indicated above. Optimum proportions of thickeners for paints of this invention are likely to lie in the range 0.1 to 0.75% by weight on the weight of the paint.

Certain thickeners and colloids, such as the synthetic clays and the water-soluble titanate, zirconate and aluminate salts, react with other paint ingredients to provide a high low-shear viscosity or structure. In order to avoid this reaction, which is not desired in paints of the present invention, we prefer to use a hydroxyethyl cellulose or hydroxypropyl methyl cellulose thickener for matt and silk finish paints. Other specific types of thickener may be suitable for matt, silk or gloss finish paints, depending on the other paint ingredients.

So-called associative thickeners have recently been introduced, particularly by Rohm & Haas who describe theirs in U.S. Patent No. 4,079,028. These may have the advantage over conventional acrylic and cellulosic thickeners of producing paints with good flow (freedom from brush marks) and good application propoerties. Such associative thickeners may be used in partial or complete replacement of conventional thickeners in paints according to this invention.

5. Anti-Foaming Agent. It is well-known that paints possessing a low viscosity tend to foam more than those with a higher viscosity, and an increased level of anti-foaming agent is therefore required for use in paints of the present invention. There are many proprietary types of anti-foaming agent available of varying degrees of effectiveness, and different paint formulations have different anti-foam demands according to the level and type of surface active agent and colloidal stabilisers used in their preparation.

The paints of this invention generally contain 2-50% by weight of pigment and/or extender; 5-30% by weight of film-forming resin; up to 1%, preferably 0.1 - 0.5% of pigment dispersing agent; up to 1%, preferably 0.1 - 0.75%,

0051919

of thickener; up to 1%, preferably 0.01 - 0.5% of anti-foaming agent; optionally other conventional emulsion paint ingredients, such as fungicides, bactericides, coalescing agents, anti-rust agents and mono-, di-, and polyhydric alcohols, in conventional amounts, balance water.

It is a further feature of the present invention that the formulation shall provide protection against repeated freezing and thawing as may be encountered during severe winter conditions during transportation or storage in unheated vehicles or premises. Whereas normal paints can still be applied by vigorous brushing even if they have been de-stabilised by freezing and thawing, in the present invention any destabilisation, coagulation, flocculation or granular appearance prevents the paint from flowing along the plastic tube. An inclusion of ethylene or propylene glycol in amounts up to 4% on total weight of paint is helpful to impart full freeze-thaw stability.

Titanium dioxide is an expensive paint ingredient. In an effort to reduce the content of titanium dioxide in paints, various techniques have been put forward in recent years for achieving opacity by other means. PPG Industries Inc. have proposed (British Patent No.1,178,612) incorporating a high-boiling liquid, which slowly evaporates from the paint film leaving empty opaque pores. Dulux (Australia) have proposed (British Patent No.1,288,583) beads with a polymeric coating and a hollow interior containing pigmentary titanium dioxide dispersed in air. SCM Corporation have proposed (Australian Patent No.481,827) plastic pigments in the form of thermo-plastic, e.g.

polystyrene beads, having a minimum film-forming
temperature slightly above ambient.    Berger Paints
(Australia) have proposed in British Patent Specification
No. 1591924 polymer aggregates of irregular shape which
are adapted to provide opacity whether or not they contain
pigment.    These techniques can be used to reduce, or even
eliminate, the conventional pigment content in emulsion
paints according to the present invention.

Properties of paints in the Examples were determined
as follows:-

### Efflux Time Viscosity.

The apparatus used for this test is illustrated in
the accompanying drawings in which:-

Figure 1 is a diagrammatic illustration of the
apparatus, and

Figure 2 is an axial section through the handle
shown as 24 in Figure 1.

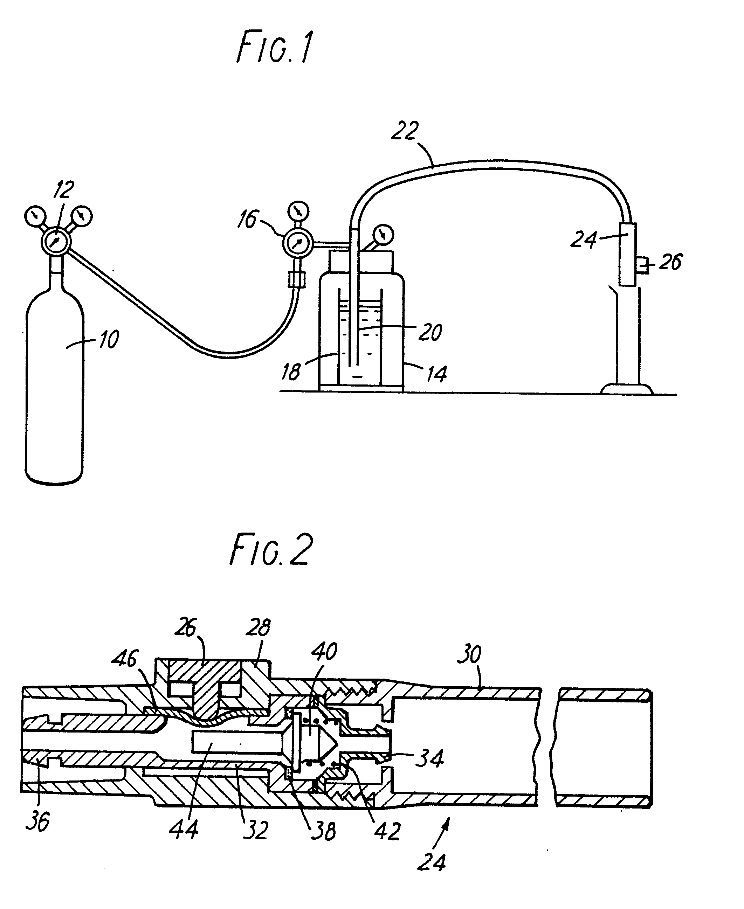

Referring to Figure 1, a commercial carbon dioxide
cylinder 10 and pressure regulator 12 are connected via
a bayonet connector to a spray gun pot 14 carrying its
own pressure regulator 16.    A plastic container 18 within
the spray gun pot contains the paint to be tested.    A 16 cm
spray gun dip tube 20, which dips below the surface of
the paint, is connected via a flexible plastics tube 22,
0.5 cm internal diameter and 1.25 m long, to a delivery
handle 24 with an on-off spring-loaded button 26.

The delivery handle 24 and push button 26 are shown
in more detail in Figure 2.    The handle includes a
housing in two parts 28, 30 screwed together, the downstream part 28 including the push button 26.    Within
the housing a tubular body 32 has an upstream extension 34 over which the end of the plastic tube 22 is a push
fit, and a downstream extension 36 for attachment to a
brush, pad or roller when the apparatus is used for
painting rather than measuring etv.    A valve is formed
by an annular gasket 38 fixed to the body 32 against
which  a rocker 40 is urged by means of a spring 42.
The rocker 40 has an extension 44 in the downstream
direction.    Manual pressure on the push button 26 tilts
the rocker 40 against the action of the spring 42 and
opens a gap between the gasket 38 and the rocker 40.
The gasket 38 is 1.7 cm in external diameter, and the
gap opened between the gasket 38 and the rocker 40 is a
maximum of 1.0 mm.    A flexible film 46 prevents paint
from leaking out round the push button 26.

The paint is brought to the desired temperature
$\pm$ 1$^{o}$C.    The container of paint is inverted and restored
five times;   then the lid is removed and the container
placed in the spray gun pot.    The lid of the pot is
screwed on and tightened, so that the dip tube extends
below the paint surface.    The supply of gas is switched
on, and both regulators adjusted to the desired pressure.
The button is depressed to fill the tube with paint and
run off a little paint.    The pressure gauges are checked.
The button is depressed, and the time taken to deliver
100 ml of paint is noted.    The apparatus is cleaned
by running water through the tube and handle.

The apparatus is checked weekly using glycerol
solution prepared by thinning 99% $^{w}$/w glycerol with
3% $^{w}$/w water to give a viscosity at 25$^{o}$C of 83 Krebs
units.    This solution gives an efflux time viscosity
at 20$^{o}$C and 69 kPa of 70 secs, which should be achieved within ± 4 seconds as the average of a duplicate determination.

High Shear Viscosity.

This is determined at a rate of shear of 10000 sec$^{-1}$ and 25$^o$C using an ICI cone and plate viscometer sold under licence by Research Equipment (London) Ltd.

Contrast Ratio.

An application of the test paint is made using a wire-wound bar coater, which deposits a wet film of approximately 50 microns thickness, to a No. 08P Morest chart. When dry the test paint is compared visually to a set of standard paints of varying opacity, applied identically and of known contrast ratio. This enables the contrast ratio of the test paint to be estimated within a narrow range of standard panels.

The contrast ratios of the standard paints are determined using the method specified in ASTM D 2805 using a Macbeth 2000 Colorimeter set to record C.I.E. "Y" values under illuminant D.65.

Freeze-Thaw Stability.

A sample of the paint under test is placed in a refrigerator at -10$^o$C and left overnight. The sample is allowed to thaw for 6 hours and then examined for signs of coagulation, i.e. a rubbery consistency or a granular or flocculated appearance. The test is continued up to a maximum of 7 cycles of freezing and thawing. Paints which look satisfactory after 7 freeze-thaw cycles are subjected to the etv test at 20$^o$C and 69 kPa.

The following Examples illustrate the invention.

The Examples are as follows:-

1 is brilliant white vinyl matt paint according to this invention.

2 is pale green vinyl matt paint according to this invention.

3 is commercially available pale cream vinyl matt paint which has been diluted by one sixth so as to reduce its efflux time viscosity to a value in the range 40 to 100 seconds at 69 kPa and $20^{o}$C.

4 is brilliant white silk paint according to this invention.

5 is blue vinyl silk paint according to this invention.

6 is a commercially available brilliant white vinyl silk paint which has been diluted by one sixth so as to reduce its efflux time viscosity to a value within the range 40 to 100 seconds at 69 kPa and $20^{o}$C.

7 is a white acrylic wood primer according to this invention.

8 and 9 are brilliant white gloss paints according to this invention.

The detailed formulations are set out in Tables 1 and 2.

The efflux time viscosities of these nine paints, measured under various conditions, are set out in Tables 3 and 4.

Other properties of the paints are set out in Table 5.

Examples 3 and 6 are included for comparison.

We have tested 36 commercially available emulsion paints of different kinds, after dilution where necessary to pass the etv test at 69 kPa and $20^{o}C$; all of them failed one or more of the etv tests used to characterize paints of this invention.

## Table 1

| Ingredient | Example No.: | | | % by weight | | |
|---|---|---|---|---|---|---|
| | 1 | 2 | 3 | 4 | 5 | 6 |
| Titanium dioxide | 23.72 | 18.95 | 12.97 | 22.46 | 6.66 | 19.44 |
| China clay | 4.98 | 5.83 | 8.69 | 0.80 | 7.48 | 2.97 |
| Talc | 9.96 | 11.65 | 4.16 | - | - | - |
| Whiting | 5.49 | 6.42 | 6.68 | - | - | - |
| Polymer emulsion A | 16.00 | 16.13 | 13.42 | - | - | - |
| B | - | - | - | 32.62 | 42.52 | - |
| C | - | - | - | - | - | 26.44 |
| Defoamer | 0.20 | 0.21 | 0.05 | 0.16 | 0.18 | 0.03 |
| Coalescing solvent | 0.81 | 0.83 | 0.66 | 0.66 | 0.72 | 0.54 |
| Ethylene glycol | 2.03 | 2.07 | - | 0.50 | 0.54 | - |
| Water | 22.89 | 22.82 | 31.24 | 19.21 | 19.27 | 27.25 |
| Pigment Dispersant | 0.26 | 0.25 | 0.16 | 0.23 | 0.23 | 0.13 |
| Ammonia | - | - | 0.05 | - | - | 0.05 |
| Sodium benzoate | - | - | 0.40 | - | - | 0.33 |
| Phenylmercury preservative | 0.10 | 0.10 | 0.10 | 0.10 | 0.10 | 0.10 |
| Gelling agent | - | - | 0.06 | - | - | 0.09 |
| Hydroxyethylcellulose (2.5% soln.) | 13.56 | 13.80 | 21.26 | 23.26 | 21.47 | 22.63 |
| Shading Colour | - | 0.94 | 0.10 | - | 0.33 | - |

- 18 -

0051919

Table 2

| Ingredient | % by Weight | | |
|---|---|---|---|
| | Ex. 7 | Ex. 8 | Ex.9. |
| Titanium Dioxide | 15.6 | 18.8 | 19.1 |
| Barytes | 8.2 | - | - |
| China Clay | 1.5 | .. | - |
| Whiting | 5.8 | - | - |
| Polymer Emulsion D. | 33.1 | - | - |
| " " E. | - | 48.5 | - |
| " " F. | - | - | 47.2 |
| Defoamer | 0.15 | 0.4 | 4.1 |
| Coalescing Solvent | 1.8 | 3.7 | 1.7 |
| Ethylene Glycol | 2.0 | 1.65 | 2.0 |
| Propylene Glycol | - | 7.0 | 8.0 |
| Water | 11.2 | 16.25 | 13.05 |
| Pigment Dispersant | 0.2 | 0.2 | 0.2 |
| Ammonia | - | 0.15 | 0.5 |
| Phenyl mercury preservative | 0.15 | 0.15 | 0.15 |
| $2\frac{1}{2}$% Hydroxyethylcellulose Soln. | 20.3 | - | - |
| Associative thickener (35% NVM) | - | 2.0 | - |
| Polyacrylate thickener (30% NVM) | - | 0.9 | 3.7 |
| Surfactant | - | 0.3 | 0.3 |

Polymer emulsion A is a polyvinyl acetate/polyvinyl versatate copolymer emulsion supplied at 52.5% solids content with an average particle size of 0.4 microns. The stabiliser used is mixed colloid and surface active agent type.

Polymer emulsion B is a fine particle size pure acrylic resin emulsion of approximately 45% solids content by weight. It is surfactant stabilised.

Polymer emulsion C is as A but with an average particle size of 0.3 microns.

Polymer emulsion D is a pure acrylic emulsion supplied at 60% solids content with an average particle size of 0.6 microns. It is a surfactant stabilised emulsion.

Polymer emulsions E and F are pure acrylic fine particle size emulsions supplied at 50% solids content by weight. They are supplied specifically for the formulation of glossy emulsion paint and are surfactant stabilised. All of polymers A, B, C, D, E and F are commercially available products.

## Table 3

### EFFLUX TIME VISCOSITY (SECONDS)

| Temperature (°C) | 20 | 5 | 30 | 20 | 20 | 20 | 20 | 20 | 20 |
|---|---|---|---|---|---|---|---|---|---|
| Pressure (kPa) | 69 | 69 | 69 | 62 | 103 | 69 | 69 | 69 | 69 |
| Pretreatment | Storage overnight | Storage overnight | Storage overnight | Storage overnight | Storage overnight | 3 months storage | 6 months storage | 12 months storage | Freeze-thaw 7 cycles |
| Permitted range | 40-100 | ≯120 | ≮35 | ≯120 | ≮20 | 40-100 | 40-100 | 40-100 | 40-100 |
| **Example** | | | | | | | | | |
| 1 | 57 | 118 | 46 | 115 | 35 | 97 | 74 | 75 | Pass |
| 2 | 54 | 90 | 56 | 87 | 30 | 56 | 64 | 62 | Pass |
| 3 | 63 | >120 | 34 | 94 | 33 | 61 | 47 | 33 | Fail 2nd cycle |
| 4 | 60 | 80 | 37 | 100 | 23 | 71 | 57 | 50 | Pass |
| 5 | 70 | 80 | 42 | 111 | 23 | 75 | 67 | 53 | Pass |
| 6 | 43 | >120 | 28 | 67 | 25 | 60 | 48 | 36 | Fail 2nd cycle |

Table 4

## EFFLUX TIME VISCOSITY (SECONDS)

### PRIMER AND GLOSS

| Temperature ( $^{o}$C) | 20 | 5/10 * | 30 | 20 | 20 | 20 | 20 |
|---|---|---|---|---|---|---|---|
| Pressure (kPa) | 69 | 69 | 69 | 62 | 103 | 69 | 69 |
| Pretreatment | Storage O/N | Storage O/N | Storage O/N | Storage O/N | Storage O/N | 3 months storage | Freeze-thaw 7 cycles |
| Permitted Range | 40-100 | ⊁120 | ⊀ 35 | ⊁120 | ⊀20 | 40-100 | 40-100 |
| Example | | | | | | | |
| 7 | 74 | 95 | 40 | 103 | 29 | 78 | Pass |
| 8 | 77 | 117 | 72 | 114 | 56 | 93 | Pass |
| 9 | 67 | 115 | 64 | 100 | 42 | 78 | Pass |

* $5^{o}$ for the primer of Example 7,

$10^{o}$ for the gloss paints of Examples 8 and 9.

Other properties of the paints of Examples 1 to 9 are set out in the following Table.

Table 5

| Example | High Shear Viscosity (Poise) | Contrast Ratio (%) |
|---|---|---|
| Permissible ranges | 0.2 - 1.5 for matt, silk or primer<br><br>0.2 - 2.5 for gloss | at least 90% for matt<br><br>at least 80% for silk or gloss |
| 1 | .55 | 96.9 |
| 2 | .60 | 96.9 |
| 3 | .60 | 87.8 |
| 4 | .40 | 85.0 |
| 5 | .40 | 86.0 |
| 6 | .40 | 78.8 |
| 7 | .85 | - |
| 8 | 1.00 | 83.0 |
| 9 | 1.25 | 83.0 |

Some points in Tables 3, 4 and 5 are worth noting.

i) All paints passed the etv test at 20°C and 69 kPa after storage overnight. However, the conventional paints of Examples 3 and 6 had to be diluted before doing so. Most conventional emulsion paints fail this test.

ii) The diluted conventional paints of Examples 3 and 6 failed the etv tests at 5°C and 30°C. Most conventional paints fail one or other of these tests.

iii)  The paints of Examples 3 and 6 passed the etv tests at 62 kPa and 103 kPa.   However, most flat or matt paints fail this test at 62 kPa.

iv)  The paints of Examples 3 and 6 both passed the etv test after storage for 3 months but failed after 12 months.   Most conventional paints fail this test .

v)  The paints of Examples 3 and 6 both failed the freeze-thaw stability test.

vi)  The contrast ratio of the conventional matt paint of Example 3 was less than thoseof the matt paints of Examples 1 and 2.   The same is true for the conventional silk paint of Example 6 compared to the silk paints of Examples 4 and 5.   The contrast ratio of the primer of Example 7 was not determined.

The diluted conventional paints of examples 3 and 6 contained oversized particles which became apparent during the cleaning process of the pressurised applicator following application testing.

### Example 10.

The viscosity properties of the polymer emulsions used in the foregoing Examples were tested at 45% solids using a Brookfield Viscometer at 25$^{\circ}$C with Spindle No.2 at 12 r.p.m.   The results are set out in Table 6.

- 24 -    0051919

## Table 6

| Polymer Emulsion | Stabiliser | Poise | Suitability |
|---|---|---|---|
| A | C/S | 2.30 | Suitable |
| B | S | 0.25 | Suitable |
| C | C/S | 4.62 | Unsuitable |
| D | S | 0.000 | Suitable |
| E | S | 0.000 | Suitable |
| F | S | 0.000 | Suitable |

Note:-  S   =  Surface Active Agent

C   =  Colloid Stabilised

C/S  =  Mixed Stabiliser.

CLAIMS

1. An emulsion paint for use with a pressurised applicator, comprising film-forming resin together with pigment and/or extender in an aqueous medium, and having an efflux time viscosity, measured as the time required to pump 100 ml through a tube of internal diameter 5 mm and length about 1.4 m under conditions defined herein:-

| Temp. ($^{o}$C) | Pressure (kPa) | Pretreatment | Permitted efflux time (seconds) |
|---|---|---|---|
| 20 | 69 | Storage overnight | About 40 to about 100 |
| 5* | 69 | " | Not more than about 120 |
| 30 | 69 | " | Not less than about 35 |
| 20 | 62 | " | Not more than about 120 |
| 20 | 103 | " | Not less than about 20 |
| 20 | 69 | Storage for 3 months | About 40 to about 100 |
| 20 | 69 | 7 freeze-thaw cycles | About 40 to about 100 |

* Gloss paints tested at 10$^{o}$C

2. An emulsion paint as claimed in claim 1, which is a matt or silk paint having an efflux time viscosity at 20$^{o}$C and 69 kPa of about 50 to about 70 seconds.

3. An emulsion paint as claimed in claim 1, which is a gloss paint or primer having an efflux time viscosity at $20^{o}$C and 69 kPa of about 70 to about 100 seconds.

4. An emulsion paint as claimed in claim 1, wherein the efflux time viscosity at $20^{o}$C and 69 kPa is about 40 to about 100 seconds after storage for 12 months.

5. An emulsion paint as claimed in claim 1, which is a matt or silk paint or primer having a high-shear viscosity, measured at $25^{o}$C and a shear rate of 10000 $sec^{-1}$, of about 0.2 to about 1.5 poise.

6. An emulsion paint as claimed in claim 1, which is a gloss paint having a high-shear viscosity, measured at $25^{o}$C and a shear rate of 10000 $sec^{-1}$, of about 0.4 to about 2.5 poise.

7. An emulsion paint as claimed in claim 1, which is a matt paint having a opacity, measured as contrast ratio, of at least 90%

8. An emulsion paint as claimed in claim 1, which is a silk or gloss paint having an opacity measured as contrast ratio, of at least 80%.

9. An emulsion paint as claimed in any one of claim 1 to 8, wherein there are no particles present greater than 0.3mm in size.

10. A method of applying paint by means of a pressurised applicator, characterized in that the paint is as claimed in any one of claims 1 to 9.

0051919

1/1

FIG.1

FIG.2

## DOCUMENTS CONSIDERED TO BE RELEVANT

| Category | Citation of document with indication, where appropriate, of relevant passages | Relevant to claim |
|---|---|---|
| DA | <u>WO - A - 80/00315</u> (BLACK & DECKER) <br> * The whole document * | 1 |
| A | <u>US - A - 4 056 500</u> (DAVID STERN) <br> * The whole document * | 1 |
| A | <u>US - A - 4 014 841</u> (B. TAUB) <br> * The whole document * | 1 |
| A | <u>US - A - 3 998 775</u> (B. TAUB) <br> * The whole document * | 1 |

**CLASSIFICATION OF THE APPLICATION (Int. Cl. 3)**

C 09 D 5/02

**TECHNICAL FIELDS SEARCHED (Int.Cl. 3)**

C 09 D 5/02
B 05 C 21/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| Place of search | Date of completion of the search | Examiner |
|---|---|---|
| The Hague | 08-02-1982 | DE ROECK |

The present search report has been drawn up for all claims